# EUROPÄISCHE PATENTSCHRIFT

(11) **EP 4 223 674 B1**
(45) Veröffentlichungstag und Bekanntmachung des Hinweises auf die Patenterteilung: **22.04.2026**
(21) Anmeldenummer: 23154759.7
(22) Anmeldetag: 02.02.2023
(51) Int. Cl.: B65G 47/82, F16G 13/20, F26B 5/06, F26B 25/00

(54) **ÜBERSCHUBEINRICHTUNG ZUM VERSCHIEBEN VON GEGENSTÄNDEN IN EINEM REINRAUM**
TRANSFER DEVICE FOR MOVING OBJECTS IN A CLEAN ROOM
DISPOSITIF DE TRANSFERT POUR DÉPLACER DES OBJETS DANS UNE SALLE BLANCHE

(30) Priorität: 04.02.2022 DE 102022102655
(43) Veröffentlichungstag der Anmeldung: 09.08.2023
(73) Patentinhaber: ACCURRO GmbH, 35041 Marburg (DE)
(72) Erfinder: BATTENBERG, Ralf, 35037 Marburg (DE); WAGNER, Alexander, 35102 Lohra (DE)
(74) Vertreter: Walther Bayer Faber Patentanwälte PartGmbB

(56) Entgegenhaltungen:
- EP-A1- 1 881 284
- DE-A1- 102004 030 676
- JP-A- 2000 320 963
- JP-A- 2020 203 798
- US-A1- 2008 134 537

## Beschreibung

Die vorliegende Erfindung betrifft eine Überschubeinrichtung zum Verschieben von Gegenständen in einem nahezu keimfreien Reinraum. Ein Reinraum ist ein hermetisch abgeriegelter Raum, in dem die Keimbelastung einen definierten, kritischen Grenzwert nicht überschreiten darf. Insbesondere darf auch die Keimbelastung der in den Reinraum zugeführten Zuluft den kritischen Grenzwert nicht überschreiten. In einem solchen Reinraum werden hochempfindlich und keimfrei zu haltende pharmazeutische Produkte hergestellt, bearbeitet und/oder gelagert.

Beispielsweise bei der Gefriertrocknung eines Arzneimittels muss sichergestellt sein, dass das Arzneimittel nicht durch Keime kontaminiert wird. Aus diesem Grunde steht eine hierzu geeignete Gefriertrocknungsanlage in einem solchen Reinraum. Außerdem befindet sich in diesem Reinraum das in offenen Vials gehaltene Arzneimittel und ein Transportsystem, welches die Vials in das Innere der Gefriertrocknungsanlage transportiert und nach erfolgter Gefriertrocknung wieder heraustransportiert. Ein Beispiel für ein solches Transportsystem ist in der EP 2 019 278 B1 beschrieben. Das Transportsystem umfasst unter anderem ein Förderband, auf dem die Vials transportiert werden und eine Überschubeinrichtung, mit der die Vials von dem Förderband heruntergebracht und ggf. wieder auf das Förderband aufgebracht werden können. Die Überschubeinrichtung umfasst eine Schubkette, wie sie beispielsweise aus der EP 1 591 693 B1 bekannt ist.

Aufgrund der Vielzahl von einzelnen Bauteilen und den teilweise schwer zugänglichen Oberflächen der Überschubeinrichtung erfordert es einen großen Aufwand, die Keimbelastung in der Überschubeinrichtung gering zu halten, das heißt, die Überschubeinrichtung entsprechend der Anforderungen an einen Reinraum zu reinigen.

Weitere Hintergrundinformationen zum technischen Gebiet, auf welches sich die vorliegende Offenbarung bezieht, können aus der US 2008/134537 A1, der JP 2020 203798 A, der JP 2000 320963 A, der EP 1 881 284 A1 und der DE 10 2004 030 676 A1 entnommen werden. Die US 2008/134537 A1 offenbart eine Überschubvorrichtung nach dem Oberbegriff des Anspruchs 1.

Davon ausgehend liegt der vorliegenden Erfindung die Aufgabe zugrunde eine Überschubeinrichtung der eingangs genannten Art zu schaffen, die zuverlässig Gegenstände in einem Reinraum verschiebt und die ohne großen Reinigungsaufwand die hygienischen Anforderungen an einen Reinraum erfüllt.

Als technische Lösung dieser Aufgabe wird erfindungsgemäß eine Überschubeinrichtung der eingangs genannten Art mit den Merkmalen des Anspruches 1 vorgeschlagen. Vorteilhafte Weiterbildungen dieser Überschubeinrichtung sind den Unteransprüchen zu entnehmen.

Eine nach dieser technischen Lehre ausgebildete Überschubeinrichtung hat den Vorteil, dass sich nur das Arbeitselement im Reinraum befindet, während der weitaus größere Teil der Überschubeinrichtung, umfassend die Antriebseinheit, außerhalb des Reinraums angeordnet ist. Die von der Antriebseinheit angetriebene Schubkette, die eine Anzahl von Kettengliedern aufweist, reicht zwar durch eine Trennwand hindurch in den Reinraum hinein, ist aber wiederum durch die Keimdichte Abdeckung vom Reinraum getrennt. Im Ergebnis sind also wesentliche Teile der Überschubeinrichtung außerhalb des Reinraumes angeordnet und unterliegen deshalb nicht den strengen hygienischen Anforderungen eines Reinraumes.

Erfindungsgemäß ist an der Unterseite des Kettengliedes eine Zahnstange ausgebildet, über die die Kettenglieder und somit die gesamte Schubkette vor- und zurückbewegt werden kann.

In einer bevorzugten Ausführungsform ist die keimdichte Abdeckung als Faltenbalg ausgebildet, wobei der Faltenbalg von der Trennwand bis zum Arbeitselement reicht und die Schubkette vollständig umschließt. Ein solcher Faltenbalg hat den Vorteil, dass sich dieser problemlos in die Länge ziehen lässt und somit die Schubkette auch dann vollständig umschließt, wenn diese maximal ausgefahren in den Reinraum hineinreicht.

Erfindungsgemäß setzt sich die Schubkette aus einer Anzahl von Kettengliedern mit einer zylindrischen Außenkontur zusammen. Diese zylindrische Außenkontur hat den Vorteil, dass hierdurch besonders scharfe Ecken und Kanten vermieden werden, sodass eine Beschädigung des Faltenbalges hierdurch vermieden wird. Ein weiterer Vorteil besteht darin, dass der im Querschnitt kreisrunde Faltenbalg auf den Kettengliedern der Schubkette aufliegen kann und dabei eine vergleichsweise große Kontaktfläche aufweist mit der Folge, dass die dabei auftretende Reibung zwischen Faltenbalg und Schubkette den Faltenbalg nicht, oder zumindest nur sehr gering beschädigt, was zu einer langen Lebensdauer des Faltenbalges führt.

In einer bevorzugten Weiterbildung wird das zylindrische Kettenglied durch eine erste und eine zweite Stirnwand begrenzt, wobei die erste und die zweite Stirnwand parallel zueinander ausgerichtet sind. Dabei ist die erste und die zweite Stirnwand in dem gleichen Winkel gegenüber einer Längsachse des Kettengliedes geneigt. Dies hat den Vorteil, dass ein Kettenglied mit seiner ersten Stirnwand großflächig an ein benachbartes Kettenglied mit seiner zweiten Stirnwand anliegen kann und somit eine quasi geschlossene Schubkette entsteht mit der Folge, dass der aufliegende Faltenbalg sich nicht zwischen benachbarten Kettengliedern verfangen kann und somit auch nicht beschädigt werden kann. Dabei hat es sich als besonders bevorzugt herausgestellt, die erste und die zweite Stirnwand orthogonal zur Längsachse auszurichten, um hier ein gleichmäßiges Anliegen benachbarter Kettenglieder zu erreichen.

In einer weiteren, bevorzugten Ausführungsform ist an der ersten Stirnwand ein aus dem Kettenglied herausragender Vorsprung ausgebildet, während an einer zweiten Stirnwand eine in das Kettenglied hineinreichende Aussparung ausgebildet ist, sodass der Vorsprung in der Aussparung aufgenommen werden kann mit dem Vorteil, dass die benachbarten Kettenglieder an ihrer ersten und zweiten Stirnwand aneinander anliegen. Des Weiteren ist im Vorsprung bzw. im Bereich der Aussparung im Kettenglied je eine Achsaufnahme ausgebildet, sodass benachbarte Kettenglieder über diese gemeinsame Achse beweglich miteinander verbunden sind. In den Vorsprüngen ist die Achsaufnahme außerhalb des Kettenliedes anordnet, während im Bereich der Aussparung die Achsaufnahme innerhalb des Kettengliedes vorgesehen ist, sodass die die beiden Kettenglieder verbindende Achse im Bereich des Kettengliedes liegt.

In einer bevorzugten Weiterbildung ist die Achse am unteren Rand an den jeweiligen Kettengliedern angeordnet. Dies hat den Vorteil, dass die benachbarten Kettenglieder nach unten weggeschwenkt werden können, um platzsparend verstaut werden zu können. Ein weiterer Vorteil besteht darin, dass die im Bereich der ersten bzw. zweiten Stirnfläche aneinander liegenden Kettenglieder durch die untenliegende Achse aneinandergehalten werden und dass somit ein Durchbiegen der Kette vermieden wird, weil ja das Kettenglied mit seiner ersten Stirnwand an der zweiten Stirnwand des benachbarten Kettengliedes anliegt. Hierdurch erreicht die Schubkette eine Steifigkeit ähnlich wie eine Stange und kann somit das Arbeitselement sehr vorteilhaft vor- und zurückbewegen.

In einer anderen, bevorzugten Ausführungsform umfasst die Antriebseinheit ein Umlenkrad, auf dem die Schubkette ruht und ein Antriebszahnrad, welches mit der Zahnstange eines einzelnen Kettengliedes in Eingriff steht, wobei beim Betätigen des Antriebszahnrades die Schubkette vor- oder zurückbewegt wird. Hierbei besteht der Vorteil darin, dass durch das Eingreifen des Antriebszahnrades in die Zahnstange eine präzise und genau dosierbare Bewegung der Schubkette möglich ist.

In einer vorteilhaften Weiterbildung ist das Antriebszahnrad unterhalb der Schubkette angeordnet und oberhalb der Schubkette greift ein Niederhalterad an das Kettenglied an, um die Zahnstange eines Kettengliedes der Schubkette in Eingriff mit dem Antriebszahnrad zu halten und um ein versehentliches Herausspringen der Schubkette vom Antriebszahnrad zu vermeiden. Dies hat den Vorteil, dass hierdurch ein sichererer Betrieb der Schubkette gewährleistet ist.

In noch einer weiteren, bevorzugten Ausführungsform ist an der Oberseite des Kettengliedes eine Einzelnut oder eine Doppelnut zur Aufnahme eines Daten- und/oder Energiekabels vorgesehen. Dies hat den Vorteil, dass dieses Daten- und/oder Energiekabel dabei in die Schubkette integriert ist und dass die Kettenglieder der Schubkette dennoch ihre zylindrische Außenkontur beibehalten können. Ein weiterer Vorteil besteht darin, dass hierdurch das Daten- und/oder Energiekabel von außen in den Reinraum eingeführt werden kann und somit an Sensoren, Schaltern oder anderen elektrischen Geräten des Arbeitselementes angeschlossen werden kann, ohne dass diese Daten- und/oder Energiekabel in den Reinraum gelangen.

Obwohl es in der Praxis möglich ist, das Arbeitselement mit einer einzelnen derart ausgeführten Schubkette zu bewegen, hat es sich als voreilhaft erwiesen, an dem Arbeitselement zwei solche, parallel angeordnete Schubketten angreifen zu lassen, um ein Verkanten des Arbeitselementes zu vermeiden. Dabei ist es vorteilhaft, diese zweite Schubkette baugleich wie die erste Schubkette auszubilden und mit einer eigenen Antriebseinheit auszustatten. Im Ergebnis umfasst die bevorzugte Überschubeinrichtung also zwei baugleiche Schubketten mit entsprechend baugleichen Antriebseinheiten, wobei der in den Reinraum hineinragende Teil der Schubkette jeweils mit einem eigenen Faltenbalg abgedeckt ist.

Weitere Vorteile der erfindungsgemäßen Überschubeinrichtung ergeben sich aus der beigefügten Zeichnung und den nachstehend beschriebenen Ausführungsformen.

Die erwähnten Ausführungsformen sind nicht als abschließende Aufzählung zu verstehen, sondern haben vielmehr beispielhaften Charakter. Es zeigen:
- Fig. 1: eine schematische Darstellung einer erfindungsgemäßen Überschubeinrichtung in perspektivischer Ansicht;
- Fig. 2: eine perspektivische Ansicht eines Kettengliedes einer Schubkette der Überschubeinrichtung gemäß Fig. 1;
- Fig. 3: eine Draufsicht auf das Kettenglied gemäß Fig. 2;
- Fig. 4: eine Seitensicht auf das Kettenglied gemäß Fig. 2;
- Fig. 5: eine geschnitten dargestellte Seitensicht auf das Kettenglied gemäß Fig. 2, geschnitten entlang Linie V - V in Fig. 3;
- Fig. 6: eine Frontansicht auf das Kettenglied gemäß 2;

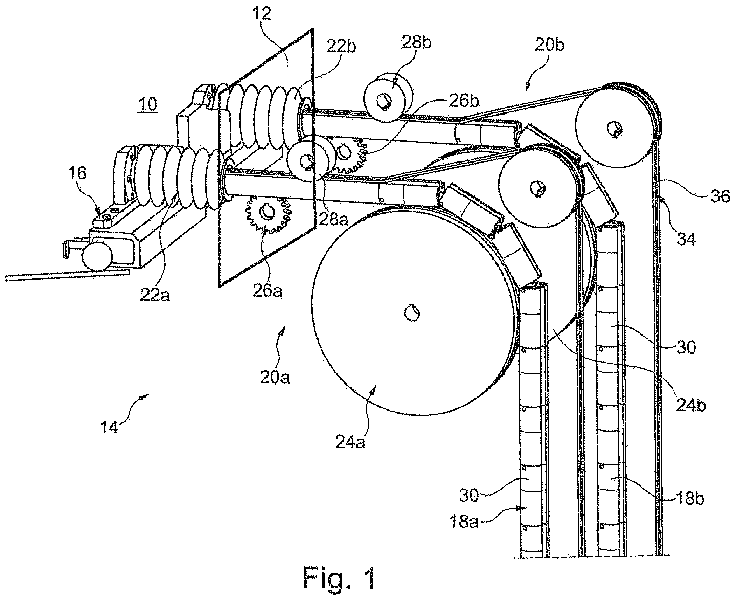

Figur 1 zeigt in schematischer Darstellung einen in einer Produktionshalle aufgebauten Reinraum 10, der durch eine Trennwand 12 begrenzt ist und eine in der Produktionshalle befindliche, erfindungsgemäße Überschubeinrichtung 14. In dem Reinraum befindet sich eine hier nicht dargestellte Gefriertrocknungsanlage und ein hier nicht dargestelltes Transportsystem zum Transportieren einer Anzahl von offenen, mit einem Arzneimittel gefüllten Vials.

Die Überschubeinrichtung 14 umfasst ein im Reinraum 10 befindliches Arbeitselement 16 zum Verschieben der Vials von dem Transportsystem in die Gefriertrocknungsanlage, zwei parallel angeordnete Schubketten 18a, 18b zum Bewegen des Antriebselementes 16, für jede Schubkette 18a, 18b je eine außerhalb des Reinraumes 10 angeordnete Antriebseinheit 20a, 20b zum Antreiben der Schubkette 18a, 18b und je einen, im Reinraum 10 vorgesehenen Faltenbalg 22a, 22b für jede Schubkette 18a, 18b zum Abkapseln des sich im Reinraum 10 befindlichen Teiles der Schubkette 18a, 18b. Zur jeder Antriebseinheit 20a, 20b gehört ein Umlenkrad 24a, 24b auf dem die Schubkette 18a, 18b ruht, je ein Antriebszahnrad 26a, 26b zum Antreiben der Schubkette 18a, 18b und je ein Niederhalterad 28a, 28b zum Andrücken der Schubkette 18, 18b auf das Antriebszahnrad 26, 26b.

Sowohl die erste Schubkette 18a, als auch die zweite Schubkette 18b ist an dem im Reinraum 10 befindlichen Arbeitselement 16 angebracht. Die Schubkette 18a, 18b reicht von dem Arbeitselement 16 ausgehend durch die Trennwand 12 hindurch und ruht auf dem Umlenkrad 24a, 24b außerhalb des Reinraumes 10, während ein sich dahinter befindlicher Teil der Schubkette 18a, 18b hängend in einer hier nicht dargestellten Führungsvorrichtung befindet. Ein erster Abschnitt der Schubkette 18a, 18b ist innerhalb des Reinraumes 10 angeordnet und reicht vom Arbeitselement 16 bis zur Trennwand 12, während ein zweiter Abschnitt der Schubkette 18a, 18b außerhalb des Reinraumes 10 angeordnet ist und von der Trennwand 12 bis über das Umlenkrad 24a, 24b reicht. Der erste Abschnitt der Schubkette 18a, 18b ist von dem im Querschnitt kreisrund ausgebildeten Faltenbalg 22a, 22b abgedeckt, der diesen Teil der Schubkette 18a, 18b gegenüber dem Reinraum 10 keimdicht abtrennt. Dabei ist der Faltenbalg 22a, 22b einerseits keimdicht am Arbeitselement 16 und andererseits keimdicht an der Trennwand 12 angebracht, so dass keine Keime in den Reinraum 10 gelangen können.

An dem Arbeitselement 16 befinden sich hier nicht näher dargestellte Sensoren zum Detektieren von Vials auf dem Transportsystem. Sobald also von den Sensoren auf dem Transportsystem befindliche Vials detektiert sind, wird die Schubkette 18a, 18b angetrieben und weiter in den Reinraum 10 hineingeschoben. Dabei wird das Arbeitselement 16 quer zum Transportsystem bewegt und schiebt die sich im Bereich des Arbeitselementes 16 befindlichen Vials vom Transportsystem in die Gefriertrocknungsanlage. Dabei vergrößert sich der erste, im Reinraum 10 befindliche Abschnitt der Schubkette 18a, 18b auf bis zu 180 cm. Gleichzeitig wird der Faltenbalg 22a, 22b entsprechend gelängt, umgibt den ersten Abschnitt der Schubkette 18a, 18b vollständig und gewährleistet somit eine zuverlässige Abschirmung der Schubkette 18a, 18b gegenüber dem keimfreien Bereich im Reinraum 10. Hierdurch ist erreicht, dass die Schubkette 18a, 18b und die Antriebseinheit 20a, 20b der Überschubeinrichtung 14 nicht den strengen hygienischen Anforderungen des Reinraumes 10 unterliegen und dementsprechend nicht so häufig und so gründlich gereinigt werden brauchen.

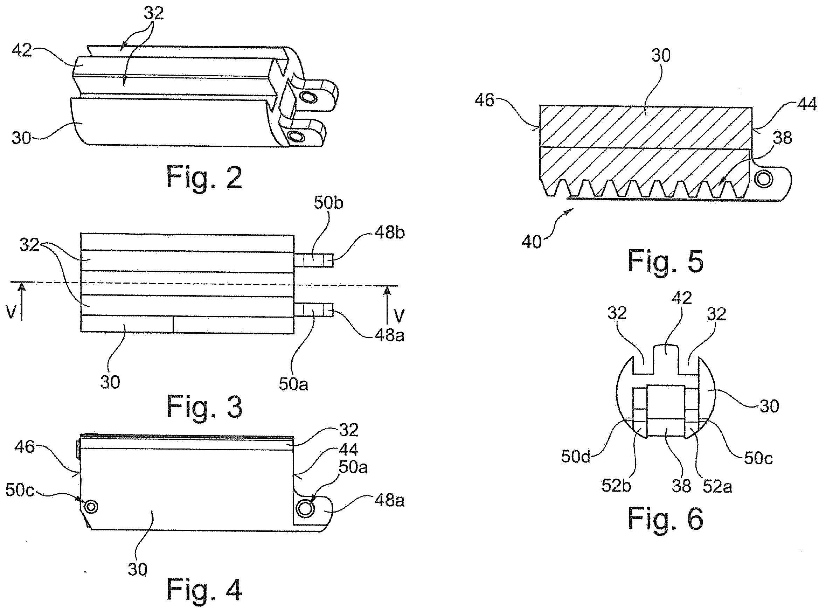

**In** den Figs. 2 bis 6 ist ein einzelnes Kettenglied 30 der Schubkette 18a, 18b dargestellt. Dieses Kettenglied 30 besitzt an seiner Oberseite eine Doppelnut 32 zur Aufnahme eines Datenkabels 34 und eines Energiekabels 36. Dieses Datenkabel 34 ist an dem Sensor im Arbeitselement 16 angeschlossen und leitet vom Sensor gelieferte Daten an eine Recheneinheit zur Steuerung der Schubkette 18a, 18b weiter. Das Energiekabel 36 ist ebenfalls am Sensor angeschlossen und versorgt diesen mit Energie. Dabei ist die Doppelnut 32 derart ausgestaltet, dass das Datenkabel 34 und das Energiekabel 36 vollständig darin aufgenommen werden kann.

Auf einer Unterseite des Kettengliedes 30 ist eine Anzahl von nach unten reichender Zähne 38 ausgebildet, die derart linear angeordnet und derart ausgebildet sind, dass sich über die Länge des Kettengliedes 30 eine Zahnstange 40 ergibt.

Das Kettenglied 30 besitzt eine zylindrische Außenkontur. das heißt, abgesehen von der Doppelnut 32 und der Zahnstange 40 ist die Außenkontur des Kettengliedes 30 zylindrisch. Dabei ist ein zwischen den einzelnen Nuten der Doppelnut 32 befindlicher Steg 42 außenseitig derart gewölbt ausgebildet, dass die Außenkontur des Kettengliedes 30 zylindrisch ist.

An einer Seite des zylindrischen Kettengliedes 30 ist eine erste, das Kettenglied 30 begrenzende Stirnwand 44 ausgebildet und an einer der ersten Stirnwand 44 gegenüberliegenden Seite des Kettengliedes 30 ist eine zweite, das Kettenglied 30 begrenzende Stirnwand 46 ausgebildet, wobei sowohl die erste Stirnwand 44 als auch die zweite Stirnwand 46 parallel zueinander und orthogonal zu einer Längsachse des Kettengliedes 30 angeordnet sind.

In einer alternativen, hier nicht dargestellten Ausführungsform sind die erste und die zweite Stirnwand parallel zueinander angeordnet und gleichermaßen zu einer Längsachse des Kettengliedes geneigt ausgerichtet.

An der ersten Stirnwand 44 ist ein erster und ein zweiter, aus dem Kettenglied 30 herausragender Vorsprung 48a, 48b ausgebildet, wobei im ersten Vorsprung 48a eine erste Achsaufnahme 50a und im zweiten Vorsprung 48b eine zweite Achsaufnahme 50b ausgebildet ist und wobei die erste und die zweite Achsaufnahme 50a, 50b außerhalb des Kettengliedes 30 angeordnet ist.

An der zweiten Stirnwand 46 ist eine erste und eine zweite, in das Kettenglied 30 hineinreichende Aussparung 52a, 52b ausgebildet, wobei die erste Aussparung 52a derart ausgebildet ist, dass darin der an der ersten Stirnwand 44 ausgebildete erste Vorsprung 48a Platz findet, während die zweite Aussparung 52b derart ausgebildet ist, dass darin der an der ersten Stirnwand 44 ausgebildete zweite Vorsprung 48b Platz findet. Im Bereich der ersten Aussparung 52a ist eine dritte Achsaufnahme 50c und im Bereich der zweiten Aussparung 52b ist eine vierte Achsaufnahme 50d ausgebildet. Dabei sind die dritte Achsaufnahme 50c und die vierte Achsaufnahme 50d innerhalb des Kettengliedes 30 angeordnet.

Sämtliche Achsaufnahmen 50a - 50d sind derart korrespondierend ausgebildet, dass eine zwei benachbarte Kettenglieder 30 zusammenhaltende, hier nicht dargestellte Achse darin aufgenommen werden kann. In der hier dargestellten Ausführungsform sind die Achsaufnahmen 50a - 50d an einem unteren Rand des Kettengliedes 30 ausgebildet, so dass auch die gemeinsame Achse am unteren Rand des Kettengliedes 30 angeordnet ist.

Die Anordnung der ersten und der zweiten Achsaufnahme 50a, 50b außerhalb des Kettengliedes 30 und die Anordnung der dritten und der vierten Achsaufnahme 50c, 50d innerhalb des Kettengliedes 30 bewirkt, dass die gemeinsame Achse ebenfalls innerhalb des Kettengliedes 30 liegt. Mit der am unteren Rand des Kettengliedes 30 angebrachten Achse ergibt sich der Effekt, dass die Kettenglieder 30 nur nach unten geschwenkt werden können. Zusammen mit den parallel angeordneten Stirnwänden 44, 46 ergibt sich, dass die erste Stirnwand 44 an der zweiten Stirnwand 46 anliegt, wenn die benachbarten Kettenglieder 30 miteinander fluchten. Im Ergebnis führt dies dazu, dass zwischen zwei Auflagern befindliche Kettenglieder 30 miteinander fluchten und die Schubkette 18a, 18b somit ähnlich wie eine Stange agiert. Für diese Ausführungsform gemäß den Fig. 1 bis 6 bedeutet dies, dass die Kettenglieder 30 der am Arbeitselement 16 befestigten und auf dem Umlenkrad 24a, 24b gehaltenen Schubkette 18a, 18b mit ihren Stirnwänden 44, 46 aneinander anliegen und die Schubkette 18a, 18b in diesem Bereich wie eine Stange agiert, so dass das Arbeitselement 16 kontrolliert vor- und zurückbewegt werden kann.

In diesem Bereich zwischen dem Arbeitselement 16 und dem Umlenkrad 24a, 24b ist unterhalb der Schubkette 18a, 18b ein Antriebszahnrad 26a, 26b derart angeordnet, dass die Zähne 38 der Zahnstange 40 mit dem Antriebszahnrad 26a, 26b in Eingriff stehen, so dass die in diesem Bereich zwischen dem Arbeitselement 16 und dem Umlenkrad 24a, 24b wie eine Stange agierende Schubkette 18a, 18b vom Antriebszahnrad 26a, 26b vor und zurück bewegt werden kann. Um einen zuverlässigen Eingriff von Antriebszahnrad 26a, 26b und Schubkette 18a, 18b zu gewährleisten ist in dem Bereich zwischen dem Arbeitselement 16 und dem Umlenkrad 24a, 24b oberhalb der Schubkette 18a,18b ein Niederhalterad 28a, 28b vorgesehen.

### Bezugszeichenliste

- 10: Reinraum
- 12: Trennwand
- 14: Überschubeinrichtung
- 16: Arbeitselement
- 18a, 18b: Schubkette
- 20a, 20b: Antriebseinheit
- 22a, 22b: Faltenbalg
- 24a, 24b: Umlenkrad
- 26a, 26b: Antriebszahnrad
- 28a, 28b: Niederhalterad
- 30: Kettenglied
- 32: Doppelnut
- 34: Datenkabel
- 36: Energiekabel
- 38: Zahn
- 40: Zahnstange
- 42: Steg
- 44: Stirnwand
- 46: Stirnwand
- 48a, 48b: Vorsprung
- 50a, 50b, 50c, 50d: Achsaufnahme
- 52a, 52b: Aussparung

## Patentansprüche

1. Überschubeinrichtung (14) zum Verschieben von Gegenständen in einem Reinraum (10), umfassend
- ein in dem Reinraum (10) befindliches Arbeitselement (16),
- eine außerhalb des Reinraumes (10) befindliche Antriebseinheit (20a, 20b),
- eine mit dem Arbeitselement (16) wirkverbundene und von der Antriebseinheit (20a, 20b) bewegbare Schubkette (18a, 18b) mit einer Anzahl von Kettengliedern (30), wobei die Schubkette (18a, 18b) von der Antriebseinheit (20a, 20b) ausgehend durch eine Trennwand (12) des Reinraumes (10) hindurch bis zu dem im Reinraum (10) befindlichen Arbeitselement (16) reicht, wobei ein erster Abschnitt der Schubkette (18a, 18b) von dem innerhalb des Reinraumes (10) befindlichen Arbeitselements (16) bis zu einer Trennwand (12) des Reinraumes (10) reicht, während ein zweiter Abschnitt der Schubkette (18a, 18b) von der Trennwand (12) bis in die außerhalb des Reinraumes (10) befindliche Antriebseinheit (20a, 20b) reicht,
- und durch eine keimdichte Abdeckung des sich im Reinraum (10) befindlichen ersten Abschnittes der Schubkette (18a, 18b), **dadurch gekennzeichnet, dass** jedes Kettenglied (30) eine zylindrische Außenkontur aufweist, wobei an einer Unterseite des Kettengliedes (30) eine Zahnstange (40) ausgebildet ist.

2. Überschubeinrichtung (14) nach Anspruch 1,
**dadurch gekennzeichnet,**
**dass** die keimdichte Abdeckung als Faltenbalg (22a, 22b) ausgebildet ist und insbesondere, dass der Faltenbalg (22a, 22b) von der Trennwand (12) bis zum Arbeitselement (16) reicht und sowohl an der Trennwand (12), als auch am Arbeitselement (16) keimdicht angebracht ist.

3. Überschubeinrichtung (14) nach Anspruch 2,
**dadurch gekennzeichnet,**
**dass** der Faltenbalg (22a, 22b) im Querschnitt kreisrund ausgeführt ist.

4. Uberschubeinrichtung (14) nach Anspruch 3,
**dadurch gekennzeichnet,**
**dass** das zumindest im Wesentlichen zylindrische Kettenglied (30) eine erste, das Kettenglied (30) begrenzende Stirnwand (44) und eine zweite, das Kettenglied (30) begrenzende Stirnwand (46) aufweist, wobei die erste Stirnwand (44) und die zweite Stirnwand (46) parallel zueinander ausgerichtet sind, wobei die erste Stirnwand (44) und die zweite Stirnwand (46) gleichermaßen zu einer Längsachse des Kettengliedes (30) geneigt ausgerichtet sind, insbesondere wobei die erste Stirnwand (44) und die zweite Stirnwand (46) orthogonal zu einer Längsachse des Kettengliedes (30) ausgerichtet sind.

5. Überschubeinrichtung (14) nach wenigstens einem der Ansprüche 3 bis 4,
**dadurch gekennzeichnet,**
**dass** an der ersten Stirnwand (44) ein aus dem Kettenglied (30) herausragender Vorsprung (48a, 48b) ausgebildet ist, wobei im Vorsprung (48a, 48b) eine Achsaufnahme (50a, 50b, 50c, 50d) ausgebildet ist und wobei die Achsaufnahme (50a, 50b, 50c, 50d) außerhalb des Kettengliedes (30) angeordnet ist,
**dass** an der zweiten Stirnwand (46) eine in das Kettenglied (30) hineinreichende Aussparung (52a, 52b) ausgebildet ist, wobei die Aussparung (52a, 52b) derart ausgebildet ist, dass darin der an der ersten Stirnwand (44) ausgebildete Vorsprung (48a, 48b) Platz findet, wobei das Kettenglied (30) im Bereich der Aussparung (52a, 52b) eine Achsaufnahme (50a, 50b, 50c, 50d) aufweist.

6. Überschubeinrichtung (14) nach wenigstens einem der Ansprüche 3 bis 4,
**dadurch gekennzeichnet,**
**dass** an der ersten Stirnwand (44) ein erster und ein zweiter, aus dem Kettenglied (30) herausragender Vorsprung (48a, 48b) ausgebildet ist, wobei im ersten Vorsprung (48a) eine erste Achsaufnahme (50a) und im zweiten Vorsprung (48b) eine zweite Achsaufnahme (50b) ausgebildet ist und wobei die erste und die zweite Achsaufnahme (50a, 50b) außerhalb des Kettengliedes (30) angeordnet ist,
**dass** an der zweiten Stirnwand (46) eine erste und eine zweite in das Kettenglied (30) hineinreichende Aussparung (52a, 52b) ausgebildet sind, wobei die die erste Aussparung (52a) derart ausgebildet ist, dass darin der an der ersten Stirnwand (44) ausgebildete erste Vorsprung (48a) Platz findet,
wobei die zweite Aussparung (52b) derart ausgebildet ist, dass darin der an der ersten Stirnwand (44) ausgebildete zweite Vorsprung (48b) Platz findet und dass das Kettenglied (30) im Bereich der ersten Aussparung (52a) eine dritte Achsaufnahme (50c) und im Bereich der zweiten Aussparung 52b) eine vierte Achsaufnahme (50d) aufweist.

7. Überschubeinrichtung (14) nach Anspruch 6,
**dadurch gekennzeichnet,**
**dass** sämtliche Achsaufnahmen (50a, 50b, 50c, 50d) einer gemeinsamen Achse am unteren Rand des Kettengliedes (30) angeordnet sind.

8. Überschubeinrichtung (14) nach einem der vorherigen Ansprüche,
**dadurch gekennzeichnet,**
**dass** die Antriebseinheit (20a, 20b) ein Umlenkrad (24a, 24b) und ein Antriebszahnrad (26a, 26b) aufweist, wobei das Antriebszahnrad (26a, 26b) mit der Zahnstange (40) eines Kettenglieds (30) der Schubkette (18a, 18b) in Eingriff steht, während ein Teil der Schubkette (18a, 18b) auf dem Umlenkrad (24a, 24b) aufliegt und sich ein dahinter liegender Teil der Schubkette (18a, 18b) hängend in einer Führungsvorrichtung befindet.

9. Überschubeinrichtung (14) nach Anspruch 8,
**dadurch gekennzeichnet,**
**dass** an einem Kettenglied (30) der Schubkette (18a, 18b) ein Niederhalterad (28a, 28b) angreift, um die Zahnstange (40) eines Kettengliedes (30) der Schubkette (18a, 18b) im Eingriff mit dem Antriebszahnrad (26a, 26b) zu halten.

10. Überschubeinrichtung (14) nach wenigstens einem der vorherigen Ansprüche,
**dadurch gekennzeichnet,**
**dass** an einer Oberseite des Kettengliedes (30) eine Einzelnut oder eine Doppelnut (34) zur Aufnahme mindestens eines Kabels (36), insbesondere eines Daten- und/oder Energiekabels, ausgebildet ist.

## Claims

1. Transfer device (14) for moving objects in a clean room (10),
comprising
- a working element (16) located in the clean room (10),
- a drive unit (20a, 20b) located outside the clean room (10),
- a push chain (18a, 18b) connected to the working element (16) and movable by the drive unit (20a, 20b), comprising a number of chain links (30), wherein the push chain (18a, 18b) extends from the drive unit (20a, 20b) through a partition wall (12) of the clean room (10) to the working element (16) located in the clean room (10), wherein a first section of the push chain (18a, 18b) extends from the working element (16) located within the clean room (10) located inside the clean room (10) to a partition wall (12) of the clean room (10), while a second section of the push chain (18a, 18b) extends from the partition wall (12) to the drive unit (20a, 20b) located outside the clean room (10), and
- a germ-proof cover for the first section of the push chain (18a, 18b) located in the clean room (10)
**characterized in that** each chain link (30) has a cylindrical outer contour, wherein
- a rack (40) is formed on a lower side of the chain link (30).

2. Transfer device (14) according to claim 1,
**characterized in that**
**in that** the germ-proof cover is designed as a bellows (22a, 22b) and, in particular, **in that** the bellows (22a, 22b) extends from the partition wall (12) to the working element (16) and is attached in a germ-proof manner both to the partition wall (12) and to the working element (16).

3. Transfer device (14) according to claim 2,
**characterized in that**
**in that** the bellows (22a, 22b) has a circular cross-section.

4. Transfer device (14) according to claim 3,
**characterized in that**
**in that** the at least substantially cylindrical chain link (30) has a first end wall (44) delimiting the chain link (30) and a second end wall (46) delimiting the chain link (30),
wherein the first end wall (44) and the second end wall (46) are aligned parallel to each other, wherein the first end wall (44) and the second end wall (46) are equally inclined relative to a longitudinal axis of the chain link (30), in particular wherein the first end wall (44) and the second end wall (46) are aligned orthogonally to a longitudinal axis of the chain link (30).

5. Transfer device (14) according to at least one of claims 3 to 4,
**characterized in that**
**in that** a projection (48a, 48b) protruding from the chain link (30) is formed on the first end wall (44), wherein an axis receptacle (50a, 50b, 50c, 50d) is formed in the projection (48a, 48b), and wherein the axis receptacle (50a, 50b, 50c, 50d) is arranged outside the chain link (30),
that a recess (52a, 52b) extending into the chain link (30) is formed on the second end wall (46), wherein the recess (52a, 52b) is formed such that the projection (48a, 48b) formed on the first end wall (44) formed on the first end wall (44) can be accommodated therein, wherein the chain link (30) has an axis receptacle (50a, 50b, 50c, 50d) in the region of the recess (52a, 52b).

6. Transfer device (14) according to at least one of claims 3 to 4,
**characterized in that**
**in that** a first and a second projection (48a, 48b) is projecting from the chain link (30), wherein a first axis receptacle (50a) is formed in the first projection (48a) and a second axis receptacle (50b) is formed in the second projection (48b), and wherein the first and second axis receptacles (50a, 50b) are arranged outside the chain link (30),
that a first and a second recess (52a, 52b) extending into the chain link (30) are formed on the second end wall (46), wherein the first recess (52a) is formed such that the first projection (48a) formed on the first end wall (44) can be accommodated therein,
the second recess (52b) being designed such that it accommodates the second projection (48b) formed on the first end wall (44),
and that the chain link (30) has a third axis receptacle (50c) in the area of the first recess (52a) and a fourth axis receptacle (50d) in the area of the second recess (52b).

7. Transfer device (14) according to claim 6,
**characterized in that**
**in that** all axis receptacles (50a, 50b, 50c, 50d) are arranged on a common axis at the lower edge of the chain link (30).

8. Transfer device (14) according to one of the preceding claims,
**characterized in that**
that the drive unit (20a, 20b) has a deflection wheel (24a, 24b) and a drive gear (26a, 26b), wherein the drive gear (26a, 26b) meshes with the rack (40) of a chain link (30) of the push chain (18a, 18b), while a portion of the push chain (18a, 18b) rests on the deflection wheel (24a, 24b) and a portion of the push chain (18a, 18b) located behind hangs in a guide device.

9. Transfer device (14) according to claim 8,
**characterized in that**
**in that** a hold-down wheel (28a, 28b) engages a chain link (30) of the push chain (18a, 18b) in order to hold the rack (40) of a chain link (30) of the push chain (18a, 18b) in engagement with the drive gear (26a, 26b).

10. Transfer device (14) according to at least one of the preceding claims,
**characterized in that**
**in that** a single groove or a double groove (32) is formed on an upper side of the chain link (30) to accommodate at least one cable (36), in particular a data and/or power cable.

## Revendications

1. Dispositif de transfert (14) pour déplacer des objets dans une salle blanche (10)
comprenant
- un élément de travail (16) situé dans la salle blanche (10),
- une unité d'entraînement (20a, 20b) située à l'extérieur de la salle blanche (10),
- une chaîne de poussée (18a, 18b) reliée de manière fonctionnelle à l'élément de travail (16) et pouvant être déplacée par l'unité d'entraînement (20a, 20b), comprenant un certain nombre de maillons (30), la chaîne de poussée (18a, 18b) partant de l'unité d'entraînement (20a, 20b) à travers une cloison (12) de la salle blanche (10) jusqu'à l'élément de travail (16) situé dans la salle blanche (10), une première partie de la chaîne de poussée (18a, 18b) s'étendant depuis l'élément de travail (16) situé à l'intérieur de la salle blanche (10) situé à l'intérieur de la salle blanche (10) jusqu'à une cloison (12) de la salle blanche (10), tandis qu'une deuxième partie de la chaîne de poussée (18a, 18b) s'étend de la cloison (12) jusqu'à l'unité d'entraînement (20a, 20b) située à l'extérieur de la salle blanche (10),
- une couverture étanche aux germes de la première partie de la chaîne de poussée (18a, 18b) située dans la salle blanche (10),
caractérisé en que chaque maillon de chaîne (30) présente un contour extérieur cylindrique, et
- une crémaillère (40) est formée sur une face inférieure du maillon de chaîne (30).

2. Dispositif de transfert (14) selon la revendication 1,
**caractérisé en ce que** le recouvrement étanche aux germes est réalisé sous forme de soufflet (22a, 22b) et en particulier **en ce que** le soufflet (22a, 22b) s'étend de la paroi de séparation (12) jusqu'à l'élément de travail (16) et est monté de manière étanche aux germes aussi bien sur la paroi de séparation (12) que sur l'élément de travail (16).

3. Dispositif de transfert (14) selon la revendication 2,
**caractérisé en ce que** le soufflet (22a, 22b) présente une section transversale circulaire.

4. Dispositif de transfert (14) selon la revendication 3,
**caractérisé en ce que** le maillon de chaîne (30) au moins essentiellement cylindrique présente une première paroi frontale (44) délimitant le maillon de chaîne (30) et une deuxième paroi frontale (46) délimitant le maillon de chaîne (30), la première paroi frontale (44) et la deuxième paroi frontale (46) étant orientées parallèlement l'une à l'autre, la première paroi frontale (44) et la deuxième paroi frontale (46) étant orientées de manière inclinée de la même manière par rapport à un axe longitudinal du maillon de chaîne (30), en particulier la première paroi frontale (44) et la deuxième paroi frontale (46) étant alignées orthogonalement à un axe longitudinal du maillon de chaîne (30).

5. Dispositif de transfert (14) selon au moins l'une des revendications 3 à 4,
**caractérisé en ce**
**qu'**une saillie (48a, 48b) dépassant du maillon de chaîne (30) est formée sur la première paroi frontale (44), un logement d'axe (50a, 50b, 50c, 50d) est formé dans la saillie (48a, 48b) et le logement d'axe (50a, 50b, 50c, 50d) est disposé à l'extérieur du maillon de chaîne (30), et
**qu'**un évidement (52a, 52b) s'étendant dans le maillon de chaîne (30) est formé sur la deuxième paroi frontale (46), l'évidement (52a, 52b) étant formé de telle sorte que la saillie (48a, 48b) formée sur la première paroi frontale (44) (48a, 48b) formée sur la première paroi frontale (44) puisse y prendre place, le maillon de chaîne (30) présentant un logement d'axe (50a, 50b, 50c, 50d) dans la zone de l'évidement (52a, 52b).

6. Dispositif de transfert (14) selon au moins l'une des revendications 3 à 4,
**caractérisé en ce que**
sur la première paroi frontale (44) sont formées une première et une deuxième saillies (48a, 48b) dépassant du maillon de chaîne (30), un premier logement d'axe (50a) étant formé dans la première saillie (48a) et un deuxième logement d'axe (50b) étant formé dans la deuxième saillie (48b), et les premier et deuxième logements d'axe (50a, 50b) étant disposés à l'extérieur du maillon de chaîne (30),
une première et une deuxième évidements (52a, 52b) s'étendant dans le maillon de chaîne (30) sont formés sur la deuxième paroi frontale (46), le premier évidement (52a) étant formé de telle sorte que la première saillie (48a) formée sur la première paroi frontale (44) y trouve sa place,
le deuxième évidement (52b) étant conçu de manière à pouvoir accueillir la deuxième saillie (48b) formée sur la première paroi frontale (44)
et que le maillon de chaîne (30) présente un troisième logement d'axe (50c) dans la zone du premier évidement (52a) et un quatrième logement d'axe (50d) dans la zone du deuxième évidement (52b).

7. Dispositif de transfert (14) selon la revendication 6,
**caractérisé en ce que** tous les logements d'axe (50a, 50b, 50c, 50d) d'un axe commun sont disposés sur le bord inférieur du maillon de chaîne (30).

8. Dispositif de transfert (14) selon l'une des revendications précédentes,
**caractérisé en ce que**
l'unité d'entraînement (20a, 20b) comporte une roue de renvoi (24a, 24b) et une roue dentée d'entraînement (26a, 26b), la roue dentée d'entraînement (26a, 26b) étant en prise avec la crémaillère (40) d'un maillon (30) de la chaîne de poussée (18a, 18b), tandis qu'une partie de la chaîne de poussée (18a, 18b) repose sur la roue de renvoi (24a, 24b) et qu'une partie de la chaîne de poussée (18a, 18b) située derrière est suspendue dans un dispositif de guidage.

9. Dispositif de transfert (14) selon la revendication 8,
**caractérisé en ce qu'**une roue de maintien (28a, 28b) agit sur un maillon (30) de la chaîne de poussée (18a, 18b) afin de maintenir la crémaillère (40) d'un maillon (30) de la chaîne de poussée (18a, 18b) en prise avec la roue dentée d'entraînement (26a, 26b).

10. Dispositif de transfert (14) selon au moins l'une des revendications précédentes, **caractérisé en ce qu'**une rainure simple ou une rainure double (34) est formée sur une face supérieure du maillon de chaîne (30) pour recevoir au moins un câble (36), en particulier un câble de données et/ou d'énergie.
